# EUROPÄISCHE PATENTSCHRIFT

(11) **EP 2 705 591 B1**
(45) Veröffentlichungstag und Bekanntmachung des Hinweises auf die Patenterteilung: **18.08.2021**
(21) Anmeldenummer: 12719666.5
(22) Anmeldetag: 02.05.2012
(51) Int. Cl.: H02K 5/167, H02K 7/08, F04D 29/041

(54) **AXIALLAGER FÜR EINEN ELEKTRISCHEN ANTRIEB**
AXIAL BEARING FOR AN ELECTRIC DRIVE
PALIER AXIAL POUR TRANSMISSION ÉLECTRIQUE

(30) Priorität: 04.05.2011 DE 102011075227
(43) Veröffentlichungstag der Anmeldung: 12.03.2014
(73) Patentinhaber: BSH Hausgeräte GmbH, 81739 München (DE)
(72) Erfinder: KALAVSKY, Michal, 04023 Kosice (SK)
(86) Internationale Anmeldenummer: PCT/EP2012/057992
(87) Internationale Veröffentlichungsnummer: WO 2012/150242

(56) Entgegenhaltungen:
- EP-A1- 0 065 585
- DE-C1- 19 548 471
- US-A1- 2005 046 292
- US-B1- 6 309 188
- None

## Beschreibung

Die Erfindung betrifft ein Axiallager zur Halterung eines Rotors auf einer Welle eines elektrischen Antriebs, insbesondere für ein Haushaltsgerät.

Bei herkömmlichen elektrischen Antrieben ist üblicherweise eine Welle vorgesehen, auf der ein Rotor des Antriebs fixiert ist. Bei Antrieben, die Kräften ausgesetzt sind, die üblicherweise bei Haushaltsgeräten vorkommen, kann es aber auch vorgesehen sein, den Rotor über ein Axiallager auf der Welle zu haltern, welches den Rotor gegen axiale Kräfte während des Betriebs absichert. Bei einem herkömmlichen, derartigen elektrischen Antrieb weist ein solches Axiallager eine zylindrische Außenkontur auf, wobei ein Durchmesser des Axiallagers so gewählt wird, dass es von einer Gummiaufnahme am Rotorkörper passend aufgenommen werden kann.

Bei einer Lageranordnung des Axiallagers ist darauf zu achten, dass eine ausreichende Friktion zwischen dem Axiallager und dem Lagersitz am Rotor erreicht wird, um ein Durchrutschen zwischen den genannten Teilen und damit deren Zerstörung zu verhindern. Dafür wird die Oberfläche der Außenkontur des Axiallagers üblicherweise angeschliffen. Dadurch erhöhen sich jedoch die Herstellungskosten.

Die US 6,309,188 B1 offenbart:
Pumpe für ein wasserführendes Haushaltsgerät, mit einem Pumpenantrieb, der einen elektrischen Antrieb umfasst, wobei der elektrische Antrieb als ein Nassläufer- Motor ausgebildet ist, bei dem zwischen Rotor und Stator ein Rotorgehäuse vorgesehen ist, das eine vordere Gehäuseschale umfasst, wobei der Rotor des elektrischen Antriebs im Inneren des Rotorgehäuses angeordnet ist, wobei eine Welle des elektrischen Antriebs durch ein vorderes, der Gehäuseschale zugewandtes Gleitlager und durch ein hinteres Gleitlager drehbar gelagert ist, wobei der Rotor auf der Welle drehfest gehaltert ist, wobei der elektrische Antrieb ein dem vorderen Gleitlager zugewandtes Axiallager zur Halterung seines Rotors auf der Welle zum Ausgleich für axiale Kräfte während des Betriebs der Pumpe aufweist, wobei das vordere Gleitlager eine Anlauffläche für eine erste Stirnfläche des Axiallagers bildet, wobei das Axiallager eine Mehrkant-Außenkontur aufweist und der Rotor einen Lagersitz umfasst, der eine der Mehrkant-Außenkontur des Axiallagers entsprechende Mehrkant-Innenkontur aufweist, wobei die erste Stirnfläche des Axiallagers einen flach verlaufenden Abschnitt aufweist, wobei die erste Stirnfläche eine Anlauffläche für das vordere Gleitlager bildet, wobei eine der ersten Stirnfläche gegenüberliegende, zweite Stirnfläche des Axiallagers vorgesehen ist, die wie die erste Stirnfläche eben verläuft, und wobei der Lagersitz eine Grundfläche aufweist.

Es ist daher Aufgabe der Erfindung, ein verbessertes Lagerungskonzeptfür einen elektrischen Antrieb einer Pumpe für ein wasserführendes Haushaltsgerät anzugeben.

Unter einem Haushaltsgerät wird ein Gerät verstanden, das zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube oder ein Kältegerät. Das kann aber auch ein Haushaltskleingerät sein, wie beispielsweise ein Kaffeevollautomat, eine Küchenmaschine oder ein Staubsauger.

Die Aufgabe wird durch die Merkmale des unabhängigen Patentanspruchs 1 gelöst. Vorteilhafte Weiterbildungsformen sind Gegenstand der abhängigen Ansprüche.

Erfindungsgemäß ist vorgesehen:
Pumpe für ein wasserführendes Haushaltsgerät, mit einem Pumpenantrieb, der einen elektrischen Antrieb umfasst, wobei der elektrische Antrieb als ein elektronisch kommutierter Nassläufer- Motor ausgebildet ist, bei dem zwischen Rotor und Stator ein Rotorgehäuse vorgesehen ist, das sich aus einer vorderen Gehäuseschale und einem topfförmigen Schild zusammensetzt, die beide miteinander formschlüssig verbunden sind, wobei der Rotor des elektrischen Antriebs im Inneren des Rotorgehäuses angeordnet ist, wobei eine Welle des elektrischen Antriebs durch ein vorderes, der Gehäuseschale zugewandtes Gleitlager und durch ein hinteres, dem Schild zugewandtes Gleitlager drehbar gelagert ist, wobei der Rotor auf der Welle drehfest gehaltert ist, wobei der elektrische Antrieb ein dem vorderen Gleitlager zugewandtes Axiallager zur Halterung seines Rotors auf der Welle zum Ausgleich für axiale Kräfte während des Betriebs der Pumpe aufweist, wobei das vordere Gleitlager eine Anlauffläche für eine erste Stirnfläche des Axiallagers bildet, wobei das Axiallager eine Mehrkant-Außenkontur aufweist und der Rotor einen Lagersitz umfasst, der eine der Mehrkant-Außenkontur des Axiallagers entsprechende Mehrkant-Innenkontur aufweist, wobei die erste Stirnfläche des Axiallagers einen flach verlaufenden Abschnitt aufweist, wobei die erste Stirnfläche eine Anlauffläche für das vordere Gleitlager bildet, wobei diese erste Stirnfläche eine Ausnehmung aufweist, die mittig durch ein Achsloch des Axiallagers verläuft, wobei eine der ersten Stirnfläche gegenüberliegende, zweite Stirnfläche des Axiallagers einen gekrümmt verlaufenden Abschnitt aufweist, wobei der Lagersitz eine Grundfläche aufweist, die einen gekrümmt verlaufenden Abschnitt aufweist, und wobei die Grundfläche des Lagersitzes eine Krümmung aufweist, die exakt oder im Wesentlichen der Krümmung der zweiten Stirnfläche des Axiallagers entspricht.

Beispielsweise weist die Mehrkant-Außenkontur die Form eines Sechsecks bzw. Hexagons, insbesondere eines regulären Hexagons, auf. Durch die Außenkontur des Axiallagers kann das Axiallager vereinfacht in einen Lagersitz oder eine Aufnahme am Rotor des Antriebs aufgenommen werden. Damit wird ein passgenaues Zusammensetzen ermöglicht. Zudem ist keine Gummiaufnahme um die Außenkontur des Axiallagers erforderlich. Dementsprechend lässt sich beim Zusammensetzen einer Anordnung aus Rotor und Axiallager ein separater Arbeitsschritt sparen.

Das Axiallager umfasst beispielsweise einen keramischen Werkstoff oder ist aus dem keramischen Werkstoff hergestellt.

Erfindungsgemäß weist das Axiallager eine erste Stirnfläche, eine zweite Stirnfläche und die Mehrkant-Außenkontur auf, wobei die erste und die zweite Stirnfläche einander gegenüberliegen. Ferner umfasst das Axiallager ein Achsloch, welches beispielsweise mittig durch die erste und/oder die zweite Stirnfläche verläuft.

Erfindungsgemäß weist die erste Stirnfläche des Axiallagers zumindest einen flach verlaufenden Abschnitt auf. Somit kann die erste Stirnfläche eine flache Oberfläche des Axiallagers bilden.

Erfindungsgemäß weist die erste Stirnfläche des Axiallagers eine Ausnehmung auf, die mittig durch das Achsloch des Axiallagers verläuft. In der Ausnehmung, die beispielsweise als Kerbe in einer flachen Oberfläche gestaltet sein kann, kann beispielsweise Flüssigkeit zum Schmieren der Achse geführt werden. Bei einem möglichen Einsatz des Axiallagers in einem Pumpenantrieb ist die Flüssigkeit beispielsweise von der Pumpe gepumptes Wasser.

Erfindungsgemäß weist die zweite Stirnfläche des Axiallagers einen gekrümmt verlaufenden Abschnitt auf. Dadurch kann eine Kippbewegung des Axiallagers entlang der Krümmung ermöglicht werden.

Gemäß einer weiteren Ausführungsform weist das Achsloch des Axiallagers einen sich zumindest teilweise verjüngenden Abschnitt auf. Beispielsweise ist das Achsloch in einem ersten Abschnitt zylindrisch mit gleichem bzw. nahezu gleichem Durchmesser und in einem zweiten Abschnitt konisch verlaufend, so dass der Durchmesser des Achslochs sich beispielsweise kontinuierlich verändert.

Gemäß einer weiteren Ausführungsform weist das Achsloch des Axiallagers an der ersten Stirnfläche des Axiallagers einen kleineren Innendurchmesser als an der zweiten Stirnfläche auf. Beispielsweise weitet sich das Achsloch in einem konischen Abschnitt von einem kleineren Innendurchmesser im Inneren des Axiallagers zu einem größeren Innendurchmesser an der zweiten Stirnfläche des Axiallagers auf. Dadurch kann eine Bewegung bzw. ein Spiel des Axiallagers auf der Welle zugelassen werden.

Erfindungsgemäß ist vorgesehen ein elektrischer Antrieb für ein wasserführendes Haushaltsgerät. Der elektrische Antrieb ist als Pumpenantrieb in einer Pumpe ausgebildet.

Erfindungsgemäß umfasst der Rotor des elektrischen Antriebs einen Lagersitz, der eine der Mehrkant-Außenkontur des Axiallagers entsprechende Mehrkant-Innenkontur aufweist. Dadurch wird eine passgenaue Aufnahme des Axiallagers am Rotor unterstützt. Beispielsweise weist der Lagersitz hierbei seitliche Einkerbungen auf. Insbesondere ist der Lagersitz in Form von einzelnen Segmenten ausgebildet ist, die ringförmig mit einem Abstand zwischen jeweils zwei benachbarten Segmenten angeordnet sind. Dadurch wird weniger Material für den Lagersitz am Rotor benötigt, während ein passgenauer Sitz des Axiallagers in dem Lagersitz beibehalten werden kann. Der Lagersitz weist zudem beispielsweise eine Außenkontur in Form eines Kreises auf. Der Lagersitz ist dementsprechend außen rund und innen eckig entsprechend der Mehrkant-Außenkontur des Axiallagers.

Erfindungsgemäß weist die Grundfläche des Lagersitzes einen gekrümmt verlaufenden Abschnitt auf. Dadurch kann eine Bewegung des Axiallagers in dem Lagersitz ermöglicht werden. Beispielsweise weisen die Grundfläche des Lagersitzes und die zweite Stirnfläche des Axiallagers eine Krümmung auf, die der jeweils anderen Krümmung entspricht. Dadurch kann das Axiallager in der gekrümmten Grundfläche des Lagersitzes, insbesondere seitlich, gleiten. Um eine solche Bewegung des Axiallagers in dem Lagersitz zu unterstützen, ist das Axiallager beispielsweise mit Spiel in dem Lagersitz angeordnet.

Gemäß einer weiteren Ausführungsform ist das Axiallager mit Spiel auf der Welle oder einer Achse des Antriebs befestigt. Beispielsweise ist hierzu ein Innendurchmesser, insbesondere der kleinste Innendurchmesser des Achslochs des Axiallagers etwas größer als der entsprechende Außendurchmesser der Welle bzw. Achse, die an dieser Stelle durch das Achsloch verläuft. Dadurch können nicht vermeidbare Fertigungsungenauigkeiten des Antriebs ausgeglichen werden, wodurch sich eine vorzeitige Abnutzung von Lagern, beispielsweise Radiallagern des Antriebs, verhindern lässt.

Erfindungsgemäß ist vorgesehen eine Pumpe für ein wasserführendes Haushaltsgerät mit einem Pumpenantrieb, der einen elektrischen Antrieb gemäß einer der beschriebenen Ausführungsformen umfasst.

Gemäß einer Ausführungsform weist die Welle des Antriebs in der Pumpe ein Flügelrad auf. Der Pumpenantrieb ist erfindungsgemäss ein elektronisch kommutierter Nassläufer-Motor.

Erfindungsgemäß ist die Pumpe für wasserführende Haushaltsgeräte geeignet. Unter wasserführenden Haushaltsgeräten werden beispielsweise Geschirrspülmaschinen, Waschmaschinen, Waschtrockner oder Kaffeevollautomaten verstanden.

Gemäß weiterer Aspekte betrifft die Erfindung ein wasserführendes Haushaltsgerät mit einer Pumpe gemäß einer der zuvor beschriebenen Ausführungsformen.

Weitere Ausführungsbeispiele werden Bezug nehmend auf die beiliegenden Zeichnungen erläutert. Es zeigen:
- Fig. 1: eine Ausführungsform einer Pumpe mit Pumpenantrieb,
- Fig. 2: eine Draufsicht in axialer Richtung auf den Rotor der Pumpe gemäß Figur 1 mit Axiallager,
- Fig. 3, 4, 5: verschiedene Ansichten des Axiallagers gemäß Figur 2,
- Fig. 6: eine Draufsicht auf das Axiallager gemäß Figur 2 und eine Schnittansicht quer durch das Achsloch,
- Fig. 7: eine Explosionsdarstellung des Rotors gemäß Figur 2 mit Axiallager,
- Fig. 8: eine Schnittansicht des Rotors gemäß Figur 7 mit Axiallager,
- Fig. 9: eine perspektivische Ansicht des Rotors gemäß Figur 7 mit im Lagersitz aufgenommenen Axiallager,
- Fig. 10: einen Schnitt durch den Lagersitz mit Axiallager, das symmetrisch zur Achse angeordnet ist, und
- Fig. 11: einen Schnitt durch den Lagersitz mit Axiallager, das asymmetrisch zur Achse angeordnet ist.

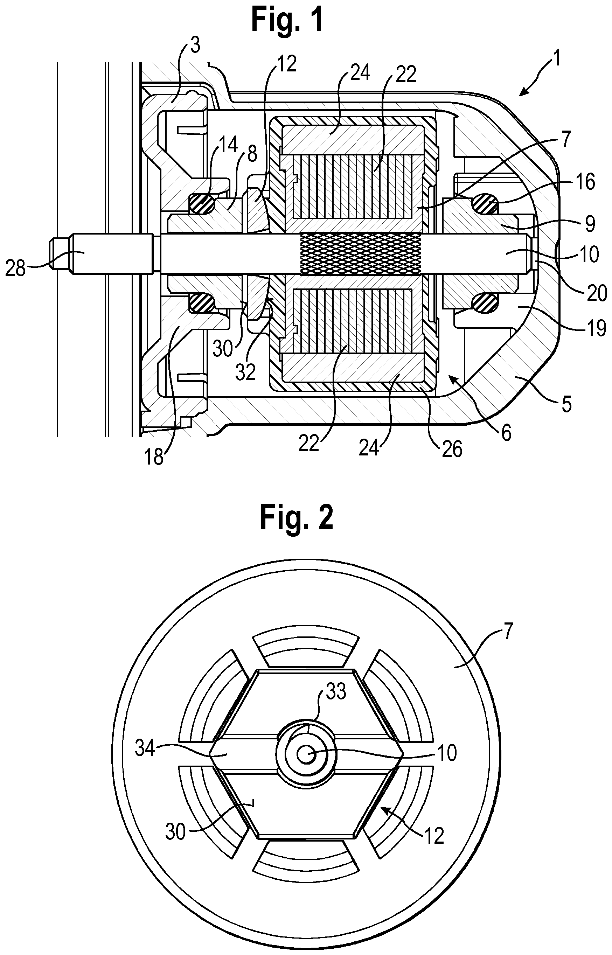

Fig. 1 zeigt erfindungsgemäß eine Pumpe 1 mit einem elektrischen Antrieb 6, welcher als Pumpenantrieb dient. Der Antrieb 6 ist als ein elektronisch kommutierter Nassläufer-Motor ausgebildet, bei dem zwischen Rotor 7 und Stator (nicht gezeigt) ein Rotorgehäuse vorgesehen ist. Dieses Rotorgehäuse setzt sich zusammen aus einer vorderen Gehäuseschale 3 und einem topfförmigen Schild 5, die beide miteinander formschlüssig verbunden sind. Im Inneren des Rotorgehäuses ist der Rotor 7 des elektrischen Antriebs 6 angeordnet. Eine Welle 10 des elektrischen Antriebs 6 ist durch ein vorderes, der Gehäuseschale 3 zugewandtes Gleitlager 8 und durch ein hinteres, dem Schild 5 zugewandtes Gleitlager 9 drehbar gelagert. Der Rotor 7 ist auf der Welle 10 drehfest gehaltert. Zum Ausgleich für axiale Kräfte während des Betriebs der Pumpe 1 ist zur Halterung des Rotors 7 auf der Welle 10 ein Axiallager 12 vorgesehen.

Zwischen dem vorderen Gleitlager 8 und der Gehäuseschale 3 ist ein O-Ring 14, der beispielsweise aus Gummi besteht, angeordnet. In ähnlicher Weise ist auch am hinteren Gleitlager 9 ein O-Ring 16 vorgesehen. Die Gleitlager 8, 9 mit den O-Ringen 14, 16 sind in einem vorderen bzw. einem hinteren Gleitlagersitz 18, 19 angeordnet. Das dem topfförmigen Schild 5 zugewandte Ende der Welle 10 ist mit einem Abstand 20 zu dem Schild 5 angeordnet, so dass eine axiale Bewegung der Welle 10 ohne Beschädigung möglich ist. Es ist auch möglich zwischen diesem Ende der Welle 10 und dem Schild 5 ein elastisches Dämpfungselement, beispielsweise in Form eines Gummis, vorzusehen, um axiale Bewegungen der Welle 10 abzufangen.

Der Rotor 7 umfasst beispielsweise einen geblechten Rotorkern 22, der Permanentmagnete 24 trägt. Der Rotorkern 22 und die Permanentmagnete 24 sind mit einem Mantel 26 aus Kunststoffmaterial fluiddicht umformt. Beispielsweise ist auf einem vorderen Ende der Welle 10 als Flügelradsitz 28, außerhalb des Rotorgehäuses ein Flügelrad drehfest befestigt, welches hier aus Übersichtsgründen nicht dargestellt ist.

Das Axiallager 12 weist eine erste Stirnfläche 30 und eine zweite Stirnfläche 32 auf. Die erste Stirnfläche 30, die dem Rotor 7 abgewandt ist, weist zumindest flache Abschnitte auf oder ist ganz oder größtenteils flach. Die zweite Stirnfläche 32, die dem Rotor 7 zugewandt ist bzw. mit dem Rotor 7 in Kontakt steht, weist eine Krümmung oder zumindest gekrümmte Abschnitte auf. Der Rotor 7 weist eine Aufnahme für das Axiallager 12 in Form eines Lagersitzes 40 auf. Dieser Lagersitz 40 kann einstückig mit dem Mantel 26 des Rotors 7 aus Kunststoffmaterial gefertigt sein. Der Lagersitz 40, in dem das Axiallager 12 aufgenommen ist, ist entsprechend der Krümmung der zweiten Stirnfläche 32 geformt, so dass sich ein vollständiger oder zumindest nahezu vollständiger Formschluss zwischen dem Axiallager 12 und dem Rotor 7 ergibt.

Fig. 2 stellt eine Draufsicht des Rotors 7 entlang der Welle 10 dar. Auf der Welle 10 und auf dem Rotor 7 ist das Axiallager 12 befestigt, welches eine Mehrkant-Außenkontur aufweist, die vorliegend die Form eines regulären Hexagons bzw. Sechsecks aufweist. In der dargestellten Anordnung ist die erste Stirnfläche 30 des Axiallagers 12 sichtbar, welche einen ersten und einen zweiten flachen Abschnitt oberhalb bzw. unterhalb einer Ausnehmung 34 aufweist. Die Ausnehmung 34 verläuft mittig durch das Axiallager 12 über ein Achsloch 33 hinweg und ist beispielsweise als Kerbe, Nut oder runder Kanal ausgebildet. Durch die mehrkantige Ausführung des Axiallagers 12 kann vereinfacht ein fester Sitz im Rotor 7 erreicht werden.

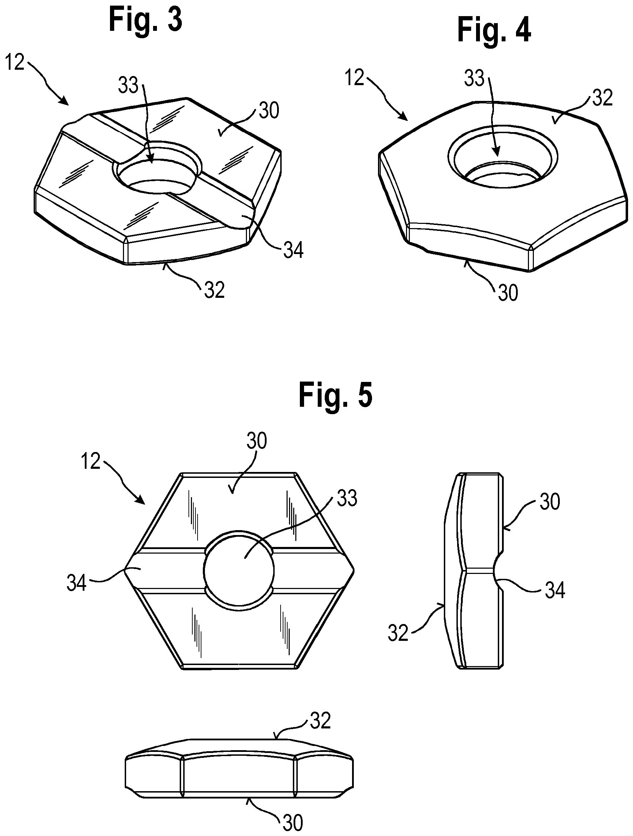

In den Fig. 3 und 4 sind perspektivische Ansichten des Axiallagers 12 unter unterschiedlichen Betrachtungswinkeln dargestellt. In Fig. 3 ist die erste Stirnfläche 30 mit den flachen Abschnitten und der mittig durch das Achsloch 33 verlaufende Ausnehmung 34 sichtbar. Die Kanten an der ersten Stirnfläche 30 sind leicht abgeschrägt. In der Ausnehmung 34 kann beispielsweise Flüssigkeit geführt werden, welche zur Befeuchtung oder Schmierung der hier nicht dargestellten Welle 10 dient.

Fig. 4 zeigt die dem Rotor 7 zugewandte Seite des Axiallagers 12, so dass insbesondere die zweite Stirnfläche 32, welche eine Krümmung aufweist, sichtbar ist.

Fig. 5 zeigt eine weitere Darstellung des Axiallagers 12 in verschiedenen Ansichten. Hierbei ist links oben eine Draufsicht auf die erste Stirnfläche 30 dargestellt, bei der die hexagonale Form des Axiallagers 12 sowie die Ausprägung der Ausnehmung 34 sichtbar sind. In der rechten und in der unteren Darstellung ist zu erkennen, wie die erste Stirnfläche 30 flach verläuft, während die zweite Stirnfläche 32 eine Krümmung, insbesondere im Randbereich, aufweist. Zudem ist in der rechten Darstellung die runde Form der Ausnehmung 34 sichtbar.

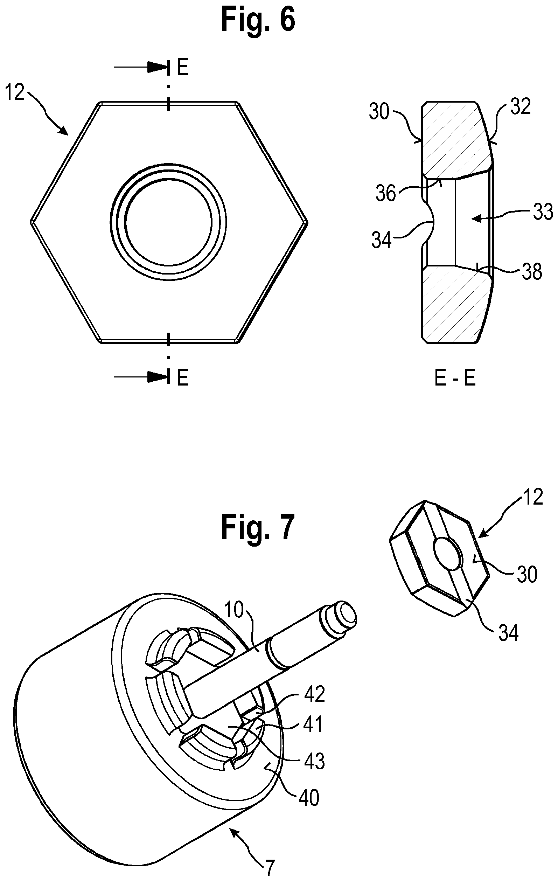

Fig. 6 zeigt eine Draufsicht auf die dem Rotor 7 zugewandte Seite des Axiallagers 12 und eine Schnittansicht quer durch das Achsloch. Hierbei sind wieder die flache Ausprägung der ersten Stirnfläche 30 und die gekrümmte Ausprägung der zweiten Stirnfläche 32 sichtbar. Ebenso ist wiederum die runde Ausnehmung 34 zu erkennen. Das Achsloch 33 weist einen ersten Abschnitt 36 und einen zweiten Abschnitt 38 auf. Der erste Abschnitt 36, der der ersten Stirnfläche 30 zugewandt ist, weist einen konstanten oder im Wesentlichen konstanten Innendurchmesser auf und verläuft dementsprechend zylindrisch. Der zweite Abschnitt 38, der der zweiten, gekrümmten Stirnfläche 32 zugewandt ist, verläuft konisch, wobei in dem Abschnitt 38 ein Innendurchmesser des Achslochs 33 zur zweiten Stirnfläche 32 hin ansteigt. Bei einer Welle mit konstantem Außendurchmesser verbleibt somit dort ein Luftspalt zwischen Achse und Innenwand im Achsloch 33.

Fig. 7 zeigt eine Explosionsdarstellung des Rotors 7. Der Rotor 7 ist auf der Welle 10 montiert, auf die das Axiallager 12 noch aufgesetzt wird. Der Rotor 7 weist auf einer seiner Stirnflächen den Lagersitz 40 auf, der insbesondere aus der Stirnfläche herausragt. Der Lagersitz 40 ist in Form von einzelnen Segmenten 41 ausgebildet, die ringförmig mit Abstand zwischen jeweils zwei benachbarten Segmenten 41 angeordnet sind. Die einzelnen Segmente 41 weisen eine Außenkontur auf, die einem Ringsegment entspricht. Zusammen bilden die Segmente 41 somit einen Aufnahmering mit Einkerbungen 42, der eine Grundfläche 43 umfasst. Das heißt die Außenkontur des Lagersitzes 40 bzw. des aus den einzelnen Segmenten 41 gebildeten Aufnahmerings verläuft rund bzw. kreisförmig. Die einzelnen Segmente 41 weisen eine geradlinige Innenkontur auf, die jeweils entlang einer Kreissehne des Aufnahmerings verläuft. Damit ist die Innenkontur des Lagersitzes 40 bzw. des aus den einzelnen Segmenten 41 gebildeten Aufnahmerings mehrkantig ausgebildet und insbesondere der Mehrkant-Außenkontur des Axiallagers 12 angepasst.

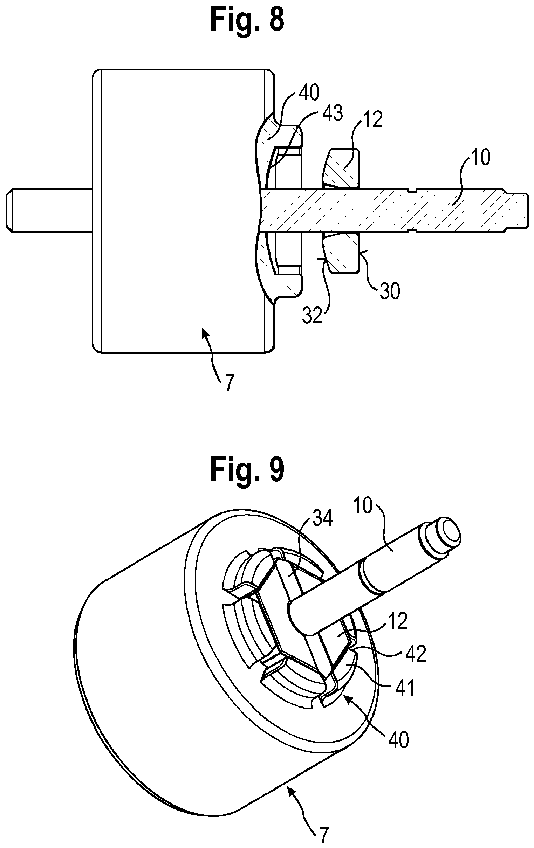

Fig. 8 zeigt eine Schnittdarstellung des Rotors 7 mit der Welle 10 und dem Axiallager 12, welches auf die Welle 10 aufgesetzt wird. In der Schnittansicht dieser Darstellung wird sichtbar, dass erfindungsgemäß die Grundfläche 43 des Lagersitzes 40 eine Krümmung aufweist, die exakt oder im Wesentlichen der Krümmung der zweiten Stirnfläche 32 des Axiallagers 12 entspricht. Dadurch ist ein passgenauer Sitz des Axiallagers 12 in dem Lagersitz 40 ermöglicht.

In der Darstellung der Fig. 9 sind Rotor 7 und Axiallager 12 im zusammengesetzten Zustand gezeigt. Hierbei ist zu erkennen, dass das Axiallager 12 durch seine spezielle Form sicher und fest in dem Lagersitz 40 gehalten wird. Der Sitz des Axiallagers 12 wird durch die Einkerbungen 42 im Aufnahmering nicht behindert. Die Ausnehmung 34 endet in der Darstellung am Rand des Axiallagers 12 in jeweils einer der Einkerbungen 42, das heißt in der Lücke, die zwischen zwei benachbarten Segmenten 41 gebildet ist.

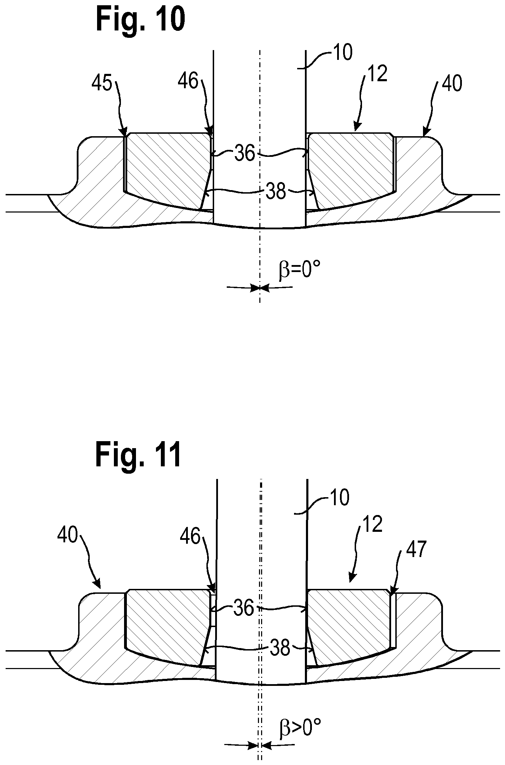

Fig. 10 zeigt eine Schnittdarstellung der Welle 10 mit dem im Lagersitz 40 montierten Axiallager 12. Bei ideal angenommener Ausrichtung der Welle 10 verläuft diese in völliger Übereinstimmung mit der theoretischen Drehachse des Rotors, so dass sich eine Winkelabweichung von β = 0° ergibt. Ein Spalt 45 zwischen Axiallager 12 und Lagersitz 40 bzw. ein Spalt 46 zwischen Axiallager 12 und Welle 10 ist in diesem Fall vernachlässigbar gering. Die Welle 10 liegt im Axiallager 12 lediglich im zylindrisch verlaufenden ersten Abschnitt 36 an, während im zweiten Abschnitt 38 kein oder nahezu kein Kontakt zwischen Welle 10 und Axiallager 12 besteht.

Bei Fertigungstoleranzen kann es jedoch zu geringen Abweichungen zwischen der theoretischen Drehachse des Rotors und der Wellenausrichtung kommen, wie dies in Fig. 11 dargestellt ist. Ein Abweichungswinkel β ist damit größer als 0° bzw. abweichend von 0°. Diese Abweichung kann vom Axiallager 12 durch einen entsprechende Spalt 46 zwischen Axiallager 12 und Welle 10 und einen Spalt 47 zwischen Axiallager 12 und Lagersitz 40 ausgeglichen werden. Durch die Krümmung an der Grundfläche des Lagersitzes 40 ist eine seitliche Bewegung des Axiallagers 12 ermöglicht, so dass die Welle 10 auch im konischen Bereich 38 mit dem Axiallager 12 in Kontakt treten kann. Insbesondere kann sich das Axiallager 12 im Betrieb der Pumpe in der Aufnahme bewegen und so zugleich einen stabilen Sitz des Rotors 7 auf der Welle 10 sowie einen Ausgleich von Fertigungsungenauigkeiten bewirken. Insbesondere können Abweichungen zwischen festen und beweglichen Teilen der Pumpe ausgeglichen werden.

In Abwandlung zu den oben dargestellten Ausführungsformen kann das Axiallager auch eine andere Mehrkant-Außenkontur aufweisen, beispielsweise in Form eines inbesondere regulären Fünfecks, Siebenecks, Achtecks. Eine Form des Lagersitzes am Rotor ist jeweils dementsprechend angepasst.

Mit einem elektrischen Antrieb, insbesondere als Pumpenantrieb für eine Pumpe gemäß einer der zuvor beschriebenen Ausführungsformen lassen sich im Vergleich zu einem herkömmlichen Antrieb Produktionskosten reduzieren, weil auf eine Gummiaufnahme zur Fixierung des Axiallagers verzichtet werden kann. Weiterhin lassen sich die Produktionskosten für eine der vorgeschlagenen Ausführungsformen reduzieren, weil auf das Anschleifen eines herkömmlichen, runden Axiallagers an der Außenseite verzichtet werden kann.

Beim Zusammensetzen der Lageranordnung, insbesondere des Axiallagers in den Rotor, ist es nicht notwendig, speziell Kraft aufzuwenden, da das Axiallager mit der Mehrkant-Außenkontur einfach in den entsprechenden Lagersitz eingesetzt bzw. eingelegt werden kann. Da das Axiallager beweglich im Rotor bzw. der Aufnahme gelagert wird, kann ein Radiallager ohne einen zusätzlichen elastischen O-Ring in der Pumpe angeordnet werden.

Eine Pumpe gemäß den beschriebenen Ausführungsformen lässt sich beispielsweise in wasserführenden Haushaltsgeräten, insbesondere in einer Geschirrspülmaschine oder in einer Waschmaschine, einsetzen.

Ein elektrischer Antrieb gemäß den beschriebenen Ausführungsformen lässt sich - nicht zur Erfindung gehörend - beispielsweise auch außerhalb von Pumpen, insbesondere bei Haushaltsgeräten wie Mixern, Küchenmaschinen, Zerkleinerern, Mahlwerken oder dergleichen, verwenden.

### BEZUGSZEICHENLISTE

- 1: Pumpe
- 3: Gehäuseschale
- 5: Schild
- 6: elektrischer Antrieb
- 7: Rotor
- 8,9: Gleitlager
- 10: Achse
- 12: Axiallager
- 14, 16: O-Ring
- 18, 19: Gleitlagersitz
- 20: Achssitz
- 22: Rotorkern
- 24: Magnet
- 26: Mantel
- 28: Flügelradsitz
- 30, 32: Stirnfläche
- 33: Achsloch
- 34: Ausnehmung
- 36, 38: Achslochabschnitt
- 40: Lagersitz
- 41: Aufnahmering
- 42: Einkerbung
- 43: Grundfläche
- 45, 46, 47: Spalt

## Patentansprüche

1. Pumpe (1) für ein wasserführendes Haushaltsgerät, mit einem Pumpenantrieb, der einen elektrischen Antrieb (6) umfasst, wobei der elektrische Antrieb (6) als ein elektronisch kommutierter Nassläufer- Motor ausgebildet ist, bei dem zwischen Rotor (7) und Stator ein Rotorgehäuse vorgesehen ist, das sich aus einer vorderen Gehäuseschale (3) und einem topfförmigen Schild (5) zusammensetzt, die beide miteinander formschlüssig verbunden sind, wobei der Rotor (7) des elektrischen Antriebs (7) im Inneren des Rotorgehäuses angeordnet ist, wobei eine Welle (10) des elektrischen Antriebs (6) durch ein vorderes, der Gehäuseschale (3) zugewandtes Gleitlager (8) und durch ein hinteres, dem Schild (5) zugewandtes Gleitlager (9) drehbar gelagert ist, wobei der Rotor (7) auf der Welle (10) drehfest gehaltert ist, wobei der elektrische Antrieb (6) ein dem vorderen Gleitlager zugewandtes Axiallager (12) zur Halterung seines Rotors (7) auf der Welle (10) zum Ausgleich für axiale Kräfte während des Betriebs der Pumpe (1) aufweist, wobei das vordere Gleitlager (8) eine Anlauffläche für eine erste Stirnfläche (30) des Axiallagers (12) bildet, wobei das Axiallager (12) eine Mehrkant-Außenkontur aufweist und der Rotor (7) einen Lagersitz (40) umfasst, der eine der Mehrkant-Außenkontur des Axiallagers (12) entsprechende Mehrkant-Innenkontur aufweist, wobei die erste Stirnfläche (30) des Axiallagers (12) einen flach verlaufenden Abschnitt aufweist, wobei die erste Stirnfläche (30) eine Anlauffläche für das vordere Gleitlager (8) bildet, wobei diese erste Stirnfläche (30) eine Ausnehmung (34) aufweist, die mittig durch ein Achsloch (33) des Axiallagers (12) verläuft, wobei eine der ersten Stirnfläche (30) gegenüberliegende, zweite Stirnfläche (32) des Axiallagers (12) einen gekrümmt verlaufenden Abschnitt aufweist, wobei der Lagersitz (40) eine Grundfläche (43) aufweist, die einen gekrümmt verlaufenden Abschnitt aufweist, und wobei die Grundfläche (43) des Lagersitzes (40) eine Krümmung aufweist, die exakt oder im Wesentlichen der Krümmung der zweiten Stirnfläche (32) des Axiallagers (12) entspricht.

2. Pumpe (1) nach Anspruch 1, **dadurch gekennzeichnet, dass** die Mehrkant-Außenkontur die Form eines Hexagons, insbesondere eines regulären Hexagons, aufweist.

3. Pumpe (1) nach einem der vorhergehenden Ansprüche, **dadurch gekennzeichnet, dass** das Achsloch (33) des Axiallagers (12) einen sich zumindest teilweise verjüngenden Abschnitt (38) aufweist.

4. Pumpe (1) nach einem der vorhergehenden Ansprüche, **dadurch gekennzeichnet, dass** das Achsloch (33) des Axiallagers (12) an einer ersten Stirnfläche (30) des Axiallagers (12) einen kleineren Innendurchmesser aufweist als an einer zweiten Stirnfläche (32) des Axiallagers (12).

5. Pumpe (1) nach einem der vorhergehenden Ansprüche, **dadurch gekennzeichnet, dass** das Axiallager (12) einen keramischen Werkstoff umfasst.

6. Pumpe (1) nach einem der vorhergehenden Ansprüche, **dadurch gekennzeichnet, dass** der Lagersitz (40) seitliche Einkerbungen (42) aufweist.

7. Pumpe (1) nach einem der vorhergehenden Ansprüche, **dadurch gekennzeichnet, dass** der Lagersitz (40) eine Außenkontur in Form eines Kreises aufweist.

8. Pumpe (1) nach einem der vorhergehenden Ansprüche, **dadurch gekennzeichnet, dass** der Lagersitz (40) in Form von einzelnen Segmenten (41) ausgebildet ist, die ringförmig mit einem Abstand zwischen jeweils zwei benachbarten Segmenten (41) angeordnet sind.

9. Pumpe (1) nach einem der vorhergehenden Ansprüche, **dadurch gekennzeichnet, dass** das Axiallager (12) mit Spiel in dem Lagersitz (40) angeordnet ist.

10. Pumpe (1) nach einem der vorhergehenden Ansprüche, **dadurch gekennzeichnet, dass** das Axiallager (12) mit Spiel auf der Welle (10) des Antriebs (6) befestigt ist.

11. Pumpe (1) nach einem der vorhergehenden Ansprüche, **dadurch gekennzeichnet, dass** die Welle (10) des Pumpenantriebs (6) ein Flügelrad aufweist.

12. Wasserführendes Haushaltsgerät mit einer Pumpe (1) nach einem der vorhergehenden Ansprüche.

## Claims

1. Pump (1) for a water-conducting household appliance, with a pump drive, which comprises an electric drive (6), wherein the electric drive (6) is embodied as an electronically commutated wet-running motor, in which a rotor housing is provided between rotor (7) and stator and is composed of a front housing shell (3) and a pot-shaped shield (5), which are both connected to one another in a form-fit manner, wherein the rotor (7) of the electric drive (7) is arranged inside the rotor housing, wherein a shaft (10) of the electric drive (6) is rotatably mounted by a front sliding bearing (8) facing the housing shell (3) and by a rear sliding bearing (9) facing the plate (5), wherein the rotor (7) is retained on the shaft (10) in a torque-proof manner, wherein the electric drive (6) has an axial bearing (12) facing the front sliding bearing for retaining its rotor (7) on the shaft (10) so as to compensate for axial forces during operation of the pump (1), wherein the front sliding bearing (8) forms a planar surface for a first end face (30) of the axial bearing (12), wherein the axial bearing (12) has a multi-sided outer contour and the rotor (7) comprises a bearing seat (40), which has a multi-sided inner contour which corresponds to the multi-sided outer contour of the axial bearing (12), wherein the first end face (30) of the axial bearing (12) has a section which runs in a planar fashion, wherein the first end face (30) forms a planar surface for the front sliding bearing (8), wherein this first end face (30) has a recess (34), which runs centrally through an axle hole (33) of the axial bearing (12), wherein a second end face (32) of the axial bearing (12) facing the first end face (30) has a section which runs in a curved fashion, wherein the bearing seat (40) has a base surface (43), which has a section which runs in a curved fashion, and wherein the base surface (43) of the bearing seat (40) has a curvature which corresponds exactly or substantially to the curvature of the second end face (32) of the axial bearing (12).

2. Pump (1) according to claim 1, **characterised in that** the multi-sided outer contour takes the form of a hexagon, in particular a regular hexagon.

3. Pump (1) according to one of the preceding claims, **characterised in that** the axle hole (33) of the axial bearing (12) has a section (38) which tapers at least partially.

4. Pump (1) according to one of the preceding claims, **characterised in that** the axle hole (33) of the axial bearing (12) on a first end face (30) of the axial bearing (12) has a smaller inner diameter than on a second end face (32) of the axial bearing (12).

5. Pump (1) according to one of the preceding claims, **characterised in that** the axial bearing (12) comprises a ceramic material.

6. Pump (1) according to one of the preceding claims, **characterised in that** the bearing seat (40) has lateral notches (42).

7. Pump (1) according to one of the preceding claims, **characterised in that** the bearing seat (40) has an outer contour in the form of a circle.

8. Pump (1) according to one of the preceding claims, **characterised in that** the bearing seat (40) is embodied in the form of individual segments (41), which are arranged annularly at a distance between two adjacent segments (41) in each case.

9. Pump (1) according to one of the preceding claims, **characterised in that** the axial bearing (12) is arranged with play in the bearing seat (40).

10. Pump (1) according to one of the preceding claims, **characterised in that** the axial bearing (12) is fastened with play to the shaft (10) of the drive (6).

11. Pump (1) according to one of the preceding claims, **characterised in that** the shaft (10) of the pump drive (6) has a fan.

12. Water-conducting household appliance with a pump (1) according to one of the preceding claims.

## Revendications

1. Pompe (1) pour un appareil ménager à circulation d'eau, comprenant un entraînement de pompe qui comprend un entraînement électrique (6), dans laquelle l'entraînement est réalisé en tant qu'un moteur à rotor noyé commuté électroniquement dans lequel un carter de rotor est ménagé entre le rotor (7) et le stator, lequel est composé d'une coque de carter avant (3) et d'un bouclier (5) en forme de pot, qui sont les deux reliés entre eux par adhérence de forme, dans laquelle le rotor (7) de l'entraînement électrique (7) est disposé à l'intérieur du carter de rotor, dans laquelle un arbre (10) de l'entraînement électrique (6) est logé de manière rotative au moyen d'un palier lisse (8) avant tourné vers la coque de carter (3) et d'un palier lisse (9) arrière tourné vers le bouclier (5), dans laquelle le rotor (7) est maintenu sur l'arbre (10) de manière résistante à la rotation, dans laquelle l'entraînement électrique (6) présente un palier axial (12) tourné vers le palier lisse avant pour le maintien de son rotor (7) sur l'arbre (10) pour compenser les forces axiales pendant le fonctionnement de la pompe (1), dans laquelle le palier lisse avant (8) forme une surface de butée pour une première surface frontale (30) du palier axial (12), dans laquelle le palier axial (12) présente un contour extérieur polygonal et le rotor (7) comprend un siège de palier (40) qui présente un contour intérieur polygonal correspondant au contour extérieur polygonal du palier axial (12), dans laquelle la première surface frontale (30) du palier axial (12) présente une section s'étendant de manière plane, dans laquelle la première surface frontale (30) forme une surface de butée pour le palier lisse (8) avant, dans laquelle cette première surface frontale (30) présente un évidement (34) qui s'étend centralement à travers un trou d'axe (33) du palier axial (12), dans laquelle une deuxième surface frontale (32) du palier axial (12), opposée à la première surface frontale (30), présente une section s'étendant de manière courbée, dans laquelle le siège de palier (40) présente une surface de base (43) qui présente une section s'étendant de manière courbée, et dans laquelle la surface de base (43) du siège de palier (40) présente une courbure qui correspond exactement ou essentiellement à la courbure de la deuxième surface frontale (32) du palier axial (12).

2. Pompe (1) selon la revendication 1, **caractérisée en ce que** le contour extérieur polygonal présente la forme d'un hexagone, notamment d'un hexagone régulier.

3. Pompe (1) selon l'une quelconque des revendications précédentes, **caractérisée en ce que** le trou d'axe (33) du palier axial (12) présente une section (38) se rétrécissant au moins en partie.

4. Pompe (1) selon l'une quelconque des revendications précédentes, **caractérisée en ce que** le trou d'axe (33) du palier axial (12) présente sur une première surface frontale (30) du palier axial (12) un diamètre intérieur plus petit que sur la deuxième surface frontale (32) du palier axial (12).

5. Pompe (1) selon l'une quelconque des revendications précédentes, **caractérisée en ce que** le palier axial (12) comprend un matériau céramique.

6. Pompe (1) selon l'une quelconque des revendications précédentes, **caractérisée en ce que** le siège de palier (40) présente des entailles latérales (42).

7. Pompe (1) selon l'une quelconque des revendications précédentes, **caractérisée en ce que** le siège de palier (40) présente un contour extérieur sous forme d'un cercle.

8. Pompe (1) selon l'une quelconque des revendications précédentes, **caractérisée en ce que** le siège de palier (40) est réalisé sous forme de segments individuels (41) qui sont disposés de manière annulaire avec un écart entre respectivement deux segments adjacents (41).

9. Pompe (1) selon l'une quelconque des revendications précédentes, **caractérisée en ce que** le palier axial (12) est disposé dans le siège de palier (40) avec jeu.

10. Pompe (1) selon l'une quelconque des revendications précédentes, **caractérisée en ce que** le palier axial (12) est fixé sur l'arbre (10) de l'entraînement (6) avec jeu.

11. Pompe (1) selon l'une quelconque des revendications précédentes, **caractérisée en ce que** l'arbre (10) de l'entraînement de pompe (6) présente une roue ailée.

12. Appareil ménager à circulation d'eau comprenant une pompe (1) selon l'une quelconque des revendications précédentes.
